# EUROPÄISCHE PATENTSCHRIFT

(11) **EP 4 229 374 B1**
(45) Veröffentlichungstag und Bekanntmachung des Hinweises auf die Patenterteilung: **02.07.2025**
(21) Anmeldenummer: 21794334.9
(22) Anmeldetag: 13.10.2021
(51) Int. Cl.: G01K 1/08, G01K 7/16

(54) **SENSORANORDNUNG UND VERFAHREN ZUR HERSTELLUNG EINER SENSORANORDNUNG**
SENSOR ARRANGEMENT AND METHOD FOR PRODUCING A SENSOR ARRANGEMENT
AGENCEMENT DE CAPTEUR ET PROCÉDÉ DE PRODUCTION D'UN AGENCEMENT DE CAPTEUR

(30) Priorität: 13.10.2020 DE 102020126833
(43) Veröffentlichungstag der Anmeldung: 23.08.2023
(73) Patentinhaber: TDK Electronics AG, 81671 München (DE)
(72) Erfinder: IHLE, Jan, 8074 Raaba-Grambach (AT); SEIFERT, Torben, 8510 Stainz (AT); SABEDER-DAIMINGER, Sasa, 2000 Maribor (SI); HOJAS, Gerhard, 8565 Sankt Johann (AT)
(74) Vertreter: Epping - Hermann - Fischer
(86) Internationale Anmeldenummer: PCT/EP2021/078297
(87) Internationale Veröffentlichungsnummer: WO 2022/079094

(56) Entgegenhaltungen:
- DE-B4- 112011 101 480

## Beschreibung

Die vorliegende Erfindung betrifft eine Sensoranordnung, insbesondere eine Sensoranordnung zur Messung einer Temperatur. Die vorliegende Erfindung betrifft weiterhin ein Verfahren zur Herstellung einer Sensoranordnung.

Die ständig steigenden Anforderungen an Temperatursensoren hinsichtlich höherer Einsatztemperaturen bei gleichzeitig besonders hoher Zuverlässigkeit und geringen Herstellungskosten erfordern den Einsatz von aufeinander abgestimmten neuartigen Materialkombinationen und Herstellungstechnologien.

Bisher verfügbare kostengünstige Sensoren mit geringem Edelmetallanteil (Au, Pt) sind in der Einsatztemperatur beschränkt und mit Glaseinkapselung meist nur bis 300°C einsetzbar. Sensoren für höhere Einsatztemperaturen erfordern den Einsatz von Edelmetallen, wie z.B. Platin. Bei Verwendung von FeNi Drähten mit Kupfermantel kommt es hingegen bei höheren Einsatztemperaturen zu Drahtkorrosion und somit zu einer beschränkten Lebensdauer der Sensoren.

Nach dem Stand der Technik werden Temperaturen für die Überwachung und Regelung in unterschiedlichsten Anwendungen vorwiegend mit keramischen Heißleiter-Thermistorelementen ("Negative Temperature Coefficient" / NTC Thermistoren) gemessen.

Für eine ausreichende mechanische Stabilität und zum Schutz gegen äußere Einflüsse und zur Vermeidung von Korrosion durch aggressive Medien sind im Falle von Sensorelementen diese mit einem Überzug aus einem Polymer oder einem Glas versehen.

Für eine elektrische Kontaktierung der NTC Keramik müssen metallische Elektroden aufgebracht werden. Nach dem Stand der Technik werden dazu vorwiegend Silber- als auch Goldpasten über einen Siebdruckprozess mit anschließendem Einbrand aufgebracht. Die Silbermetallisierung ist dabei vorwiegend für Lötverbindungen mit Anschlussdrähten und die Goldmetallisierung für metallische Sinterpastenkontaktierung in Verwendung. Goldmetallisierungen werden für das Sintern von Kontaktpasten mit Anschlussdrähten eingesetzt.

Die Einsatztemperatur von Lötverbindungen ist jedoch durch die Schmelztemperatur der Lote begrenzt. Hochbleihaltige Lote haben eine Schmelztemperatur von ca. 300°C und die meisten bleifreien Lote schmelzen bereits bei Temperaturen unter 230°C. Lötverbindungen sind bei häufigen Temperaturwechselbelastungen nicht ausreichend zuverlässig. Viele Lotmaterialien neigen in feuchter oder nasser Umgebung ferner zu Migration.

Für höhere Einsatztemperaturen von 250°C bis 300°C oder höher ist die Kontaktierung mittels Sinterpaste üblich. Zusätzlich sind im Herstellungsprozess wesentlich höhere Temperaturen notwendig, da aufgrund der Einsatztemperatur eine Glasumhüllung statt einer Polymerumhüllung erforderlich ist. Diese Art der so hergestellten Sensorelemente ist jedoch mit hohen Kosten verbunden, da die Elektrode und die Kontaktierungspaste aus Gold bestehen. Zusätzlich sind die Prozesskosten aufgrund der Pastenaufbringung und -trocknung sowie dem anschließenden Einbrand der Paste sehr hoch.

Das Schweißen von Drähten auf die Elektrode der NTC Keramik stellt hingegen keine Alternative dar, da es zu einer Vorschädigung der Elektrode oder der Keramik kommt. Die im Vergleich zur Elektrodenschichtstärke massiv ausgeführten Drähte erfordern einen sehr hohen Energieeintrag, um den Draht zur Herstellung der Verbindung aufzuschmelzen. Das wiederum führt aber zu einem völligen Ablösen der Elektrodenschicht von der Keramik und der damit verbundene Thermoschock kann zu Rissen in der Keramik führen oder die elektrischen Eigenschaften negativ beeinflussen.

Das Dokument DE 11 2011 101480 B4 beschreibt einen Temperatursensor mit einem wärmeempfindlichen Bauteil aus Keramik mit geringer Wärmeausdehnung mit einem linearen Ausdehnungskoeffizienten von 3x10⁻6/°C bis 5x10⁻6/°C, deren elektrische Kenndaten sich in Abhängigkeit von der Temperatur ändern, ein Paar von Elektrodenfilmen, die auf den Oberflächen des wärmeempfindlichen Bauteils vorgesehen sind, und ein Paar von Verbindungsleitungen mit einem linearen Ausdehnungskoeffizienten von 15x10⁻6/°C oder weniger, die mit den Elektrodenfilmen verbunden sind. Sind die linearen Ausdehnungskoeffizienten des wärmeempfindlichen Bauteils, des Elektrodenfilms und der Verbindungsleitung jeweils Tₐ(/°C), T_{b}(/°C) und T_{d}(/°C), erfüllt der Temperatursensor eine Beziehung Tₐ ≤ T_{b} ≤ T_{d}.

Aufgabe der vorliegenden Erfindung ist es eine Sensoranordnung und ein Verfahren zur Herstellung einer Sensoranordnung zu beschreiben, welche die oben stehenden Probleme lösen.

Diese Aufgabe wird durch eine Sensoranordnung und ein Verfahren zur Herstellung einer Sensoranordnung gemäß der unabhängigen Ansprüche gelöst.

Gemäß einem Aspekt wird eine Sensoranordnung beschrieben. Die Sensoranordnung ist zur Messung einer Temperatur ausgebildet. Die Sensoranordnung ist für hohe Einsatztemperaturen ausgebildet. Die Sensoranordnung ist eine Hochtemperatur-Sensoranordnung. Eine Anwendungstemperatur der Sensorordnung ist bevorzugt ≥ 300°C und ≤ 650°C. Besonders bevorzugt liegt die Anwendungstemperatur zwischen 450°C und 650°C.

Die Sensoranordnung weist ein Sensorelement auf. Vorzugsweise weist das Sensorelement einen NTC Thermistor Chip auf. Das Sensorelement weist einen keramischen Grundkörper auf. Vorzugsweise weist der keramische Grundkörper ein Keramikmaterial mit einer hohen Langzeitstabilität auf. Insbesondere weist der Grundkörper als Keramikmaterial eine driftstabile Perowskitkeramik gemäß dem Dokument EP 2 326 604 B9 auf.

Das Sensorelement weist ferner wenigstens zwei Elektroden, vorzugsweise genau zwei Elektroden, auf. Die Elektroden sind an einer Außenseite des keramischen Grundkörpers, beispielsweise an gegenüberliegenden Seitenflächen des Grundkörpers, angeordnet. Die Elektroden weisen bevorzugt eine Gold- oder Silberdickschichtmetallisierung auf. Vorzugsweise ist die Gold- oder Silberdickschichtmetallisierung bleifrei ausgebildet.

Die Sensoranordnung weist wenigstens zwei Kontaktierungselemente, vorzugsweise genau zwei Kontaktierungselemente, zur elektrischen Kontaktierung des Sensorelements auf. Bevorzugt weisen die Kontaktierungselemente Drähte auf. Die Kontaktierungselemente sind in einem Anbindungsbereich mit den Elektroden mechanisch und elektrisch leitend verbunden. Die Elektroden und die Kontaktierungselemente sind über eine Gold- oder Silber-Kontaktierungspaste miteinander verbunden.

Die Kontaktierungselemente weisen ein Material auf, welches besonders temperaturbeständig ist und gleichzeitig eine geringe Korrosionsneigung zeigt. Die Kontaktierungselemente weisen ferner keinen oder lediglich einen geringen Edelmetallanteil auf. Dadurch kann eine besonders kostengünstige und temperaturbeständige Sensoranordnung bereitgestellt werden. Bevorzugt weisen die Kontaktierungselemente eine Nickel-Eisen Legierung oder Silber mit geringen Anteilen von Nickel auf. Besonders bevorzugt bestehen die Kontaktierungselemente aus Nickel-Eisen Legierung oder Silber mit geringen Anteilen von Nickel.

Zusätzlich können die Kontaktierungselemente eine Schutzschicht zur weiteren Hemmung der Korrosion aufweisen. Die Schutzschicht ist an einer Außenseite des jeweiligen Kontaktierungselements ausgebildet. Vorzugsweise bedeckt die Schutzschicht die Außenseite des jeweiligen Kontaktierungselements vollständig. Die Schutzschicht kann Ni, Cu oder Ag aufweisen. Insbesondere mit Ag ummantelte Kontaktierungselemente weisen eine hohe Langzeitstabilität bei Temperaturen bis über 650°C auf.

Die Sensoranordnung weist eine Glasummantelung auf. Die Glasummantelung ist über dem Sensorelement und den Anbindungsbereich aufgebracht. Bevorzugt sind das Sensorelement und der Anbindungsbereich vollständig in die Glasummantelung eingebracht.

Die Glasummantelung kann mittels Tauchlackieren in einer Paste, in der Glaspulver dispergiert ist, aufgebracht werden oder durch Aufschmelzen einer zylindrischen Glaspreform erzielt werden. Die Glasummantelung dient zum Schutz und zur mechanischen Stabilisierung des Sensorelements und des Anbindungsbereichs.

Die Glasummantelung ist druckverspannt. Die Ausdehnungskoeffizienten der Glasummantelung, der Kontaktierungselemente und des Sensorelements sind zur Druckverspannung der Glasummantelung aufeinander abgestimmt. Vorzugsweise ist der Ausdehnungskoeffizient in einem Innenbereich der Sensoranordnung größer als in einem Außenbereich der Sensoranordnung. Mit anderen Worten, die Glasummantelung weist einen kleineren Ausdehnungskoeffizienten auf als der keramische Grundkörper und die Kontaktierungselemente. Dies führt zu einer Zugspannung im Inneren der Sensoranordnung, wodurch eine Druckspannung auf die Oberfläche der Glasummantelung ausgeübt wird.

Durch die Druckverspannung der Glasummantelung wird eine Steigerung der mechanischen Festigkeit der Glasummantelung und folglich der Sensoranordnung erzielt. Damit wird eine besonders stabile und langlebige Sensoranordnung zur Verfügung gestellt. Insbesondere ist die Sensoranordnung besonders beständig bzw. langzeitstabil gegenüber hohen Einsatztemperaturen, vorzugsweise Temperaturen bis 650°C.

Gemäß einem Ausführungsbeispiel weist die Glasummantelung ein Material auf, dessen Schmelztemperatur unterhalb der Schmelztemperatur eines Materials der Elektroden liegt. Somit kann während des Einglasungsprozesses ein Aufschmelzen der Elektroden und des Kontaktierungsbereichs vermieden werden. Damit wird gewährleistet, dass die Herstellung ohne eine Anschädigung der Elektrode ermöglicht wird.

Die Glasummantelung weist ferner bevorzugt ein Material auf, dessen Erweichungstemperatur T_{g} oberhalb einer Anwendungstemperatur der Sensoranordnung liegt. Dadurch kann eine hohe Einsatztemperatur, bevorzugt eine Einsatztemperatur bis 650°C, erzielt werden.

Bevorzugt weist die Glasummantelung ein rekristallisierendes Glas auf. Besonders bevorzugt weist die Glasummantelung ein rekristallisierendes Barium-Zink-Silikatglas auf. Somit wird eine Sensoranordnung mit einem Design angegeben, das mit einer geeigneten Materialkombination unter Verwendung von Drähten ohne oder mit nur geringem Edelmetallanteil einen korrosions- und migrationsbeständigen Sensor für höhere Einsatztemperaturen ermöglicht.

Gemäß einem Ausführungsbeispiel weist die Sensoranordnung ferner eine Keramikkappe auf. Die Keramikkappe kann beispielsweise Aluminiumoxid aufweisen. Vorzugsweise weist die Keramikkappe einen Ausdehnungskoeffizienten auf, der geringfügig größer ist als der Ausdehnungskoeffizient der Glasummantelung. Vorzugsweise ist der Unterschied der Ausdehnungskoeffizienten von Keramikkappe und Glasummantelung kleiner 1 ppm.

Das Sensorelement und der Anbindungsbereich sind vorzugsweise vollständig in der Keramikkappe eingebracht. Ferner sind die Kontaktierungselemente sowie die Glasummantelung zumindest teilweise in der Keramikkappe eingebracht. Die Keramikkappe ist mit der Glasummantelung zumindest teilweise verschmolzen. Die Keramikkappe erhöht die Langzeitstabilität der Sensoranordnung bei hohen Einsatztemperaturen.

Gemäß einem weiteren Aspekt wird ein Verfahren zur Herstellung einer Sensoranordnung beschrieben. Vorzugsweise wird durch das Verfahren die oben beschriebene Sensoranordnung hergestellt. Alle Eigenschaften, die in Bezug auf die Sensoranordnung oder das Verfahren offenbart sind, sind auch entsprechend in Bezug auf den jeweiligen anderen Aspekt offenbart und umgekehrt, auch wenn die jeweilige Eigenschaft nicht explizit im Kontext des jeweiligen Aspekts erwähnt wird. Das Verfahren weist die folgenden Schritte auf:
A) Bereitstellung eines Sensorelements aufweisend einen keramischen Grundkörper und wenigstens zwei Elektroden. Bevorzugt weisen die Elektroden eine bleifreie Gold- oder Silberdickschichtmetallisierung auf. Vorzugsweise weist das Sensorelement einen NTC Thermistor Chip auf.
B) Bereitstellung von wenigstens zwei Kontaktierungselementen, vorzugsweise zwei Drähten. Bevorzugt bestehen die Kontaktierungselemente aus Nickel-Eisen Legierung oder Silber mit geringen Anteilen von Nickel. Auf den Kontaktierungselementen können ferner Schutzschichten aufweisend Ni, Cu oder Ag aufgebracht sein.

Teilweises Eintauchen der Kontaktierungselemente in eine Kontaktierungspaste. Bevorzugt weist die Kontaktierungspaste Silber oder Gold auf. Ein in der Kontaktierungspaste eingetauchter Bereich der Kontaktierungselemente (Mantelbereich) ist dabei kleiner als eine Kantenlänge des keramischen Grundkörpers. Mit anderen Worten, die Kontaktierungselemente sind nicht über die gesamte Kantenlänge des keramischen Grundkörpers mit den Elektroden verbunden.

C) Anpressen der Kontaktierungselemente an die Elektroden in einem Anbindungsbereich. Der Anbindungsbereich ist dabei kleiner als die Kantenlänge des keramischen Grundkörpers.

D) Sintern. Dabei wird der vorbereitete Sensor in einen Ofen gegeben und einem thermischen Profil unterzogen. Hierbei kann es sich um einen Batchofen oder Durchlaufofen handeln.

E) Teilweises Eintauchen des gesinterten Systems (Grundkörper, Elektroden, Kontaktierungselemente) mit einer definierten Geschwindigkeit in eine Glaspaste (Tauchlackieren mit Glaspaste). Insbesondere wird das gesinterte System derart in die Glaspaste getaucht, dass das Sensorelement (Grundkörper, Elektroden) und wenigstens der Anbindungsbereich vollständig mit Glaspaste umschlossen sind um eine vollständige Glasummantelung zu erzielen. Die Glaspaste weist vorzugsweise rekristallisierendes Barium-Zink-Silikatglas auf.

F) Definierte laterale Bewegung des gesinterten Systems in der Glaspaste und anschließendes Herausziehen des gesinterten Systems aus der Glaspaste mit einer definierten Geschwindigkeit. Dieses Vorgehen dient dazu eine möglichst blasen - und fehlerfreie Glasummantelung zu erzielen.

G) Trocknen. Vorzugsweise umfasst dieser Schritt ein Vortrocknen bei Raumtemperatur und anschließendes Trocknen im Ofen bei erhöhter Temperatur. Die Trocknung muss ausreichend vorschichtig stattfinden damit eine blasen- und fehlerfreie Glasummantelung sichergestellt ist und die für die Herstellung der Glaspaste notwendige Additive entweichen können.

H) Einglasen. Hierbei wird die Glasummantelung auf eine Temperatur oberhalb einer Glaserweichungstemperatur T_{g} erhitzt und anschließend aufgeschmolzen.

Durch das Verfahren wird eine robuste und langzeitstabile Hochtemperatur-Sensoranordnung mit hermetisch dichter Glaseinkapselung erzielt. Um die Druckverspannung des Sensorkopfes (Sensorelement mit Anbindungsbereich) zu realisieren ist es neben der Auswahl der geeigneten Materialien (Ausdehnungskoeffizienten) auch besonders wichtig ein angepasstes Temperaturprofil im Ofen einzuhalten. Sowohl bei der Trocknung als auch beim Glaseinschmelzprozess können geeignete Batch- oder Durchlauföfen verwendet werden.

Gemäß einem weiteren Aspekt wird ein Verfahren zur Herstellung einer Sensoranordnung beschrieben. Vorzugsweise wird durch das Verfahren die oben beschriebene Sensoranordnung hergestellt. Alle Eigenschaften, die in Bezug auf die Sensoranordnung oder das Verfahren offenbart sind, sind auch entsprechend in Bezug auf den jeweiligen anderen Aspekt offenbart und umgekehrt, auch wenn die jeweilige Eigenschaft nicht explizit im Kontext des jeweiligen Aspekts erwähnt wird. Das Verfahren weist die folgenden Schritte auf:
A) Bereitstellung eines Sensorelements aufweisend einen keramischen Grundkörper und wenigstens zwei Elektroden. Bevorzugt weisen die Elektroden eine bleifreie Gold- oder Silberdickschichtmetallisierung auf. Vorzugsweise weist das Sensorelement einen NTC Thermistor Chip auf.
B) Bereitstellung von wenigstens zwei Kontaktierungselementen, vorzugsweise zwei Drähten. Bevorzugt bestehen die Kontaktierungselemente aus Nickel-Eisen Legierung oder Silber mit geringen Anteilen von Nickel. Auf den Kontaktierungselementen können ferner Schutzschichten aufweisend Ni, Cu oder Ag aufgebracht sein.

Teilweises Eintauchen der Kontaktierungselemente in eine Kontaktierungspaste. Bevorzugt weist die Kontaktierungspaste Silber oder Gold auf. Ein in der Kontaktierungspaste eingetauchter Bereich der Kontaktierungselemente (Mantelbereich) ist dabei kleiner als eine Kantenlänge des keramischen Grundkörpers. Mit anderen Worten, die Kontaktierungselemente sind nicht über die gesamte Kantenlänge des keramischen Grundkörpers mit den Elektroden verbunden.

C) Anpressen der Kontaktierungselemente an die Elektroden in einem Anbindungsbereich. Der Anbindungsbereich ist dabei kleiner als die Kantenlänge des keramischen Grundkörpers.

D) Sintern. Dabei wird der vorbereitete Sensor in einen Ofen gegeben und einem thermischen Profil unterzogen. Hierbei kann es sich um einen Batchofen oder Durchlaufofen handeln.

E) Aufstecken einer Glaspreform, bevorzugt eines gepressten Glasröhrchens, auf das gesinterte System. Die Glaspreform wird so auf das gesinterte System aufgesteckt, dass das Sensorelement und wenigstens der Anbindungsbereich vollständig in die Glaspreform eingebracht sind. Insbesondere wird die Glaspreform derart positioniert, dass der Sensorkopf mit keramischem Grundkörper und Anbindungsstelle von der Glaspreform überdeckt ist. Die Glaspreform weist bevorzugt ein rekristallisierendes Barium-Zink-Silikatglas auf.

F) Aufschmelzen der Glaspreform zur Ausbildung einer Glasummantelung. Das Temperaturprofil im Ofen beinhaltet dabei mehrere Schritte. Um organische Additive vorsichtig zu verdampfen, wird bei einer geringeren Temperatur eine bestimmte Haltezeit vorgesehen bevor bei einer nachfolgend höheren Temperatur das eigentliche Aufschmelzen des Glases erfolgt. Das Aufschmelzen erfolgt hierbei mittels Erhitzen der Glaspreform auf eine Temperatur oberhalb einer Glaserweichungstemperatur T_{g}.

Um die Druckverspannung des Sensorkopfes zu realisieren ist es auch bei diesem Verfahren neben der Auswahl der geeigneten Materialien besonders wichtig ein angepasstes Temperaturprofil im Ofen einzuhalten. Sowohl bei der Trocknung als auch beim Glaseinschmelzprozess können geeignete Batch- oder Durchlauföfen verwendet werden.

Gemäß einem weiteren Aspekt wird ein Verfahren zur Herstellung einer Sensoranordnung beschrieben. Vorzugsweise wird durch das Verfahren die oben beschriebene Sensoranordnung hergestellt. Alle Eigenschaften, die in Bezug auf die Sensoranordnung oder das Verfahren offenbart sind, sind auch entsprechend in Bezug auf den jeweiligen anderen Aspekt offenbart und umgekehrt, auch wenn die jeweilige Eigenschaft nicht explizit im Kontext des jeweiligen Aspekts erwähnt wird. Das Verfahren weist die folgenden Schritte auf:
A) Bereitstellung eines Sensorelements aufweisend einen keramischen Grundkörper und wenigstens zwei Elektroden. Bevorzugt weisen die Elektroden eine bleifreie Gold- oder Silberdickschichtmetallisierung auf. Vorzugsweise weist das Sensorelement einen NTC Thermistor Chip auf.
B) Bereitstellung von wenigstens zwei Kontaktierungselementen, vorzugsweise zwei Drähten. Bevorzugt bestehen die Kontaktierungselemente aus Nickel-Eisen Legierung oder Silber mit geringen Anteilen von Nickel. Auf den Kontaktierungselementen können ferner Schutzschichten aufweisend Ni, Cu oder Ag aufgebracht sein.

Teilweises Eintauchen der Kontaktierungselemente in eine Kontaktierungspaste. Bevorzugt weist die Kontaktierungspaste Silber oder Gold auf. Ein in der Kontaktierungspaste eingetauchter Bereich der Kontaktierungselemente (Mantelbereich) ist dabei kleiner als eine Kantenlänge des keramischen Grundkörpers. Mit anderen Worten, die Kontaktierungselemente sind nicht über die gesamte Kantenlänge des keramischen Grundkörpers mit den Elektroden verbunden.

C) Anpressen der Kontaktierungselemente an die Elektroden in einem Anbindungsbereich. Der Anbindungsbereich ist dabei kleiner als die Kantenlänge des keramischen Grundkörpers.

D) Sintern. Dabei wird der vorbereitete Sensor in einen Ofen gegeben und einem thermischen Profil unterzogen. Hierbei kann es sich um einen Batchofen oder Durchlaufofen handeln.

E) Bereitstellen einer Keramikkappe. Die Keramikkappe weist vorzugsweise Aluminiumoxid auf. Die Keramikkappe weist einen Innenbereich zur Aufnahme des gesinterten Systems auf. Die Keramikkappe weist ferner wenigstens zwei Durchführungen zur Aufnahme der Kontaktierungselemente auf.

Teilweises Einbringen des gesinterten Systems in die Keramickappe. Bevorzugt werden in diesem Schritt die Kontaktierungselemente von einer ersten Seite (Oberseite) der Keramikkappe her durch den Innenbereich der Keramikkappe geführt und in die Aussparungen eingebracht, so dass die Kontaktierungselemente aus einer zweiten Seite (Unterseite) der Keramikkappe zumindest teilweise herausragen.

F) Teilweises Befüllen der Keramikkappe mit einer Glaspaste in einer definierten Geschwindigkeit. Die Glaspaste weist bevorzugt rekristallisierendes Ba, Zn oder Silikatglas auf. Vorzugsweise wird der Innenbereich der Keramikkappe hierbei bis zu einem Drittel mit Glaspaste aufgefüllt. Anschließend kann eine definierte laterale Bewegung der Keramikkappe mit einer vorbestimmten Geschwindigkeit erfolgen zur gleichmäßigen Verteilung der Glaspaste im Innenbereich der Keramikkappe.

G) Weiteres Einbringen des gesinterten Systems in die teilweise mit Glaspaste gefüllte Keramikkappe mit einer definierten Geschwindigkeit. Das gesinterte System wird dabei derart eingebracht, dass das Sensorelement und der Anbindungsbereich vollständig in der Keramikkappe angeordnet ist.

H) Definierte laterale Bewegung mit einer vorbestimmten Geschwindigkeit zur Benetzung des Sensorelements und des Anbindungsbereichs mit der Glaspaste.

I) Weiteres Befüllen der Keramikkappe mit der Glaspaste. Insbesondere wird die Keramikkappe derart mit der Glaspaste befüllt, dass das Sensorelement und wenigstens der Anbindungsbereich vollständig von der Glaspaste umschlossen sind, zur Ausbildung einer Glasummantelung.

J) Trocknen. Vorzugsweise umfasst dieser Schritt ein Vortrocknen bei Raumtemperatur und anschließendes Trocknen im Ofen bei erhöhter Temperatur. Die Trocknung muss ausreichend vorschichtig stattfinden damit eine blasen- und fehlerfreie Glasummantelung sichergestellt ist und die für die Herstellung der Glaspaste notwendige Additive entweichen können.

K) Einglasen mittels Erhitzen der Glasummantelung auf eine Temperatur oberhalb einer Glaserweichungstemperatur T_{g} und Aufschmelzen der Glasummantelung.

Durch das oben beschriebene Verfahren wird eine hermetisch dichte Glasummantelung erzielt. Die resultierende Sensoranordnung ist besonders korrosionsbeständig sowie langzeitstabil unter hohen Temperaturen.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein.

Elemente, die einander gleichen oder die die gleiche Funktion übernehmen, sind mit gleichen Bezugszeichen bezeichnet.

Es zeigen:
- Figur 1: eine Schnittdarstellung einer Sensoranordnung gemäß einem ersten Ausführungsbeispiel,
- Figur 2: eine Schnittdarstellung einer Zwischenstufe in der Herstellung der Sensoranordnung gemäß Figur 1,
- Figur 3: eine Schnittdarstellung der Sensoranordnung gemäß Figur 1,
- Figur 4: eine Schnittdarstellung einer Sensoranordnung gemäß einem weiteren Ausführungsbeispiel,
- Figuren 5a bis 5c: ein Verfahren zur Herstellung der Sensoranordnung gemäß Figur 4,
- Figuren 6a bis 6e: ein alternatives Verfahren zur Herstellung der Sensoranordnung gemäß Figur 4.

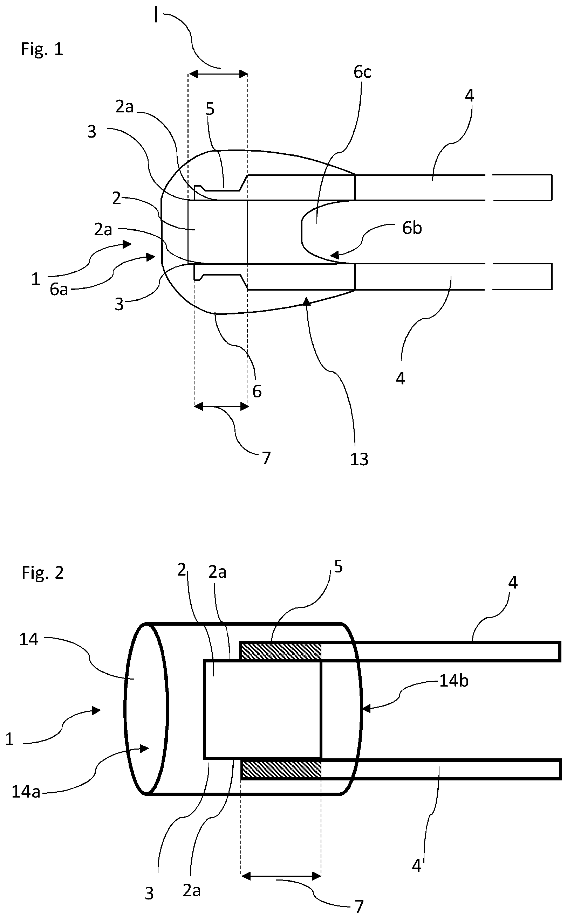

Die Figur 1 zeigt ein erstes Ausführungsbeispiel einer Sensoranordnung 1, die zur Messung einer Temperatur ausgebildet ist. Die Sensoranordnung 1 ist zum Einsatz bei hohen Temperaturen ausgebildet. Eine Anwendungstemperatur der Sensorordnung 1 ist ≥ 300°C und ≤ 650°C. Die Sensoranordnung 1 ist eine Hochtemperatur-Sensoranordnung.

Die Sensoranordnung 1 weist ein Sensorelement bzw. einen Sensorchip auf. Das Sensorelement ist vorzugsweise ein NTC Thermistor Chip. Das Sensorelement weist einen keramischen Grundkörper 2 auf. Der keramische Grundkörper 2 weist ein Keramikmaterial mit einer hohen Langzeitstabilität auf. Das Keramikmaterial weist eine driftstabile Perowskitkeramik gemäß dem Dokument EP 2 326 604 B9 auf. Insbesondere weist der keramische Grundkörper 2 ein Keramikmaterial der allgemeinen Formel[SE₁₋ₓM^{II}ₓ][Cr_{1-y-z}R_{y}L_{z}]O₃ auf, wobei SE für eine oder mehrere Seltenerdmetalle steht, M^{II} für ein oder mehrere Metalle der Oxidationsstufe +II steht, L für Al und/oder Ga steht, R für ein oder mehrere Metalle ausgewählt aus Fe, Zn, Ge, Sn steht, und es gilt: 0 < x < 1; 0 < y < 1; 0,5 < z < 1; y+z < 1; 0,1 < 1-y-z < 0,2.

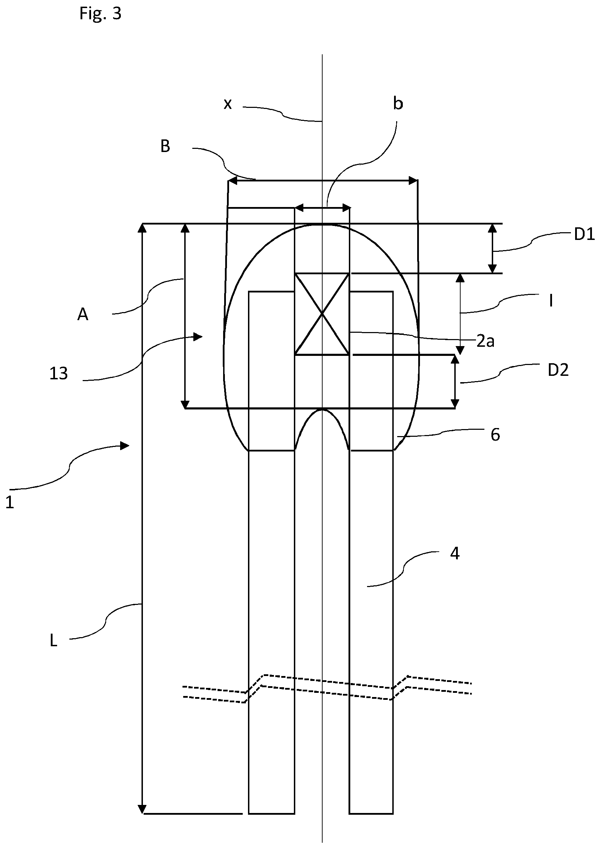

Der keramische Grundkörper 2 weist Seitenflächen 2a auf (siehe hierzu auch Figur 3). Die Seitenflächen 2a sind einander gegenüberliegend angeordnet. Die jeweilige Seitenfläche weist eine Kantenlänge l auf (Figur 3). Die Kantenlänge l ist < 2 mm, bevorzugt < 1 mm. Der keramische Grundkörper 2 weist eine Breite b auf (Figur 3). Die Breite b beträgt < 1 mm, vorzugsweise < 0,5 mm. Das Sensorelement bzw. der keramische Grundkörper 2 weist vorzugsweise eine Abmessung < 1 mm x < 1 mm x 0,500 mm auf. Die Sensoranordnung 1 weist eine gesamte Länge L (Ausdehnung entlang einer Längsachse X) auf, wie aus Figur 3 ersichtlich ist.

Das Sensorelement weist ferner zwei Elektroden 3 auf. Die Elektroden 3 sind an einer Außenfläche des Sensorelements ausgebildet. Insbesondere sind die Elektroden 3 an den gegenüberliegenden Seitenflächen 2a des keramischen Grundkörpers 2 ausgebildet. Die Elektroden 3 weisen eine Gold- oder Silberdickschichtmetallisierung auf. Die Gold- oder Silberdickschichtmetallisierung ist bleifrei.

Die Sensoranordnung 1 weist zwei Kontaktierungselemente 4 zur elektrischen Kontaktierung des Sensorelements auf. In diesem Ausführungsbeispiel weisen die Kontaktierungselemente 4 Drähte auf. Aber auch andere Kontaktierungselemente 4 sind vorstellbar.

Die Kontaktierungselemente 4 weisen eine korrosionsbeständige Zusammensetzung auf. Beispielsweise weisen die Kontaktierungselemente 4 eine Eisen-Nickel Legierung oder Silber mit geringen Anteilen von Nickel auf. In diesem Ausführungsbeispiel weisen die Kontaktierungselemente 4 NiFe auf.

Die Kontaktierungselemente 4 weisen ferner eine Schutzschicht auf (nicht explizit dargestellt) zur weiteren Hemmung der Korrosion. Die Schutzschicht kann Ni, Cu oder Ag aufweisen. Das jeweilige Kontaktierungselement 4 weist vorzugsweise einen Durchmesser zwischen 0,1 mm und 0,5 mm auf, bevorzugt zwischen 0,2 mm und 0,3 mm.

Die Kontaktierungselemente 4 sind mit den Elektroden 3 in einem Anbindungsbereich 7 elektrisch und mechanisch verbunden. Die Elektroden 3 und die Kontaktierungselemente 4 sind über eine Gold- oder Silber-Kontaktierungspaste 5 miteinander verbunden. Die Kontaktierungselemente 4 sind mit den Elektroden 3 versintert.

Der Anbindungsbereich 7 ist kleiner als die Kantenlänge l der jeweiligen Seitenfläche 2a. Mit anderen Worten, die Kontaktierungselemente 4 bedecken nur einen Teilbereich der Elektroden 3 bzw. der Seitenflächen 2a. Die Kontaktierungselemente 4 können im Anbindungsbereich 7 abgeflacht ausgebildet sein, um eine Querschnittsfläche des jeweiligen Kontaktierungselements 4 zu erhöhen.

Die Sensoranordnung 1 weist ferner eine Glasummantelung 6 auf. Die Glasummantelung 6 umschließt den keramischen Grundkörper 2 bzw. das Sensorelement sowie den Anbindungsbereich 7 in diesem Ausführungsbeispiel vollständig. Insbesondere umschließt die Glasummantelung 6 einen Kopf der Sensoranordnung 1 (Sensorkopf 13, siehe hierzu auch Figur 3) vollständig. Dabei umfasst der Sensorkopf 13 das Sensorelement sowie wenigstens einen Teilbereich der Kontaktierungselemente 4, wie aus der Figur 3 ersichtlich ist.

Eine Breite B (Ausdehnung senkrecht zur Längsachse X) des Sensorkopfs 13 inklusive Glasummantelung 6 beträgt 0,7 mm bis 2,5 mm (Figur 3). Eine minimale Längsausdehnung A (Ausdehnung entlang der Längsachse X) der Glasummantelung 6 liegt im Bereich von 0,5 bis 2,5 mm, wie aus Figur 3 ersichtlich ist. Dabei kann an einer Unterseite 6b der Glasummantelung 6 eine Einwölbung 6c der Glasummantelung 6 auftreten, wie aus Figur 3 ersichtlich ist.

Ein oberer Abstand D1 zwischen einer Oberseite des keramischen Grundkörpers 2 und einer Oberseite 6a der Glasummantelung 6 beträgt vorzugsweise mindestens 0,1 mm. Ein unterer Abstand D2 zwischen der Unterseite des keramischen Grundkörpers 2 und einer Unterseite 6b der Glasummantelung 6 beträgt ebenfalls vorzugsweise mindestens 0,1 mm (Figur 3).

Die Glasummantelung 6 bildet eine äußere Hülle des Sensorkopfs 13. Die Glasummantelung 6 ist zum Schutz und zur mechanischen Stabilisierung des Sensoranordnung 1 ausgebildet. Die Glasummantelung 6 weist ein Material auf, dessen Schmelztemperatur unterhalb der Schmelztemperatur des Elektrodenmaterials liegt. Vorzugsweise liegt die Einschmelztemperatur der Glasummantelung 6 zwischen 700°C und 900°C. Ferner weist das Material der Glasummantelung eine Erweichungstemperatur T_{g} oberhalb der Anwendungstemperatur der Sensoranordnung 1 auf. Vorzugsweise liegt die Erweichungstemperatur T_{g} mindestens 25°C oberhalb der Anwendungstemperatur.

Die Glasummantelung 6 weist ein rekristallisierendes Glas auf. Insbesondere weist die Glasummantelung 6 ein rekristallisierendes Barium-Zink-Silikatglas auf. Die Glasummantelung 6 des Sensorkopfs 13 weist im äußeren Mantel eine Druckverspannung auf. Die Ausdehnungskoeffizienten der Kontaktierungselemente 4 und des keramischen Grundkörpers 2 des Sensorelements sind zur Erreichung einer Druckverspannung der Glasummantelung 6 aufeinander abgestimmt.

Bevorzugt weist die Glasummantelung 6 einen kleineren Ausdehnungskoeffizienten α auf als die Kontaktierungselemente 4 und der keramische Grundkörper 2. Mit anderen Worten, die Sensoranordnung 1 weist in einem Innenbereich einen höheren Ausdehnungskoeffizienten auf als in einem Außenbereich. Vorzugsweise weisen die Kontaktierungselemente 4 einen Ausdehnungskoeffizienten α auf, wobei 7 [10⁻⁶ K⁻¹] ≤ α ≤ 12 [10⁻⁶ K⁻¹]. In dem Ausführungsbeispiel, in welchen die Kontaktierungselemente Silber mit geringem Anteil von Nickel aufweisen, beträgt der Ausdehnungskoeffizient α der Kontaktierungselemente 4 ca. 19 [10⁻⁶ K-¹].

Der Ausdehnungskoeffizient des keramischen Grundkörpers 2 beträgt vorzugsweise 6,5 [10⁻⁶ K⁻¹] ≤ α ≤ 8,5 [10⁻⁶ K⁻¹]. Vorzugsweise ist der Ausdehnungskoeffizient der Glasummantelung < 7 [10⁻⁶ K⁻¹], beispielsweise 6,9 [10⁻⁶ K⁻¹].

Da im Inneren der Sensoranordnung 1 ein höherer Ausdehnungskoeffizient vorliegt als im Außenbereich, üben das Sensorelement und die Kontaktierungselemente 4 im Innenbereich eine Zugspannung auf die Glasummantelung 6 aus. Diese Zugspannung im Inneren wirkt sich auf die Oberfläche der Glasummantelung 6 als Druckspannung aus. Die Druckverspannung der Glasummantelung 6 führt zu einer höheren Festigkeit bzw. zu einer härteren Oberfläche der Glasummantelung und damit zu einem modifizierten Bruchverhalten der Glasummantelung 6. Höhere mechanische Belastungen an einer Oberfläche der Glasummantelung 6 sind auf Grund der Druckverspannung daher nicht zwangsläufig bruchauslösend. Dadurch wird ein sehr robustes Design ermöglicht, das langzeitstabil ist für hohe Einsatztemperaturen bis 650°C.

Die Sensoranordnung 1 gemäß Figur 1 wird durch zwei mögliche Herstellungsverfahren (Variante 1: Tauchlackieren; Variante 2: Glaspreform) hergestellt, welche jedoch in einigen Prozessschritten identisch sind.

Im Folgenden wird zunächst die Herstellung der Sensoranordnung mittels Variante 1 (Tauchlackieren) beschrieben:
In einem ersten Schritt A) wird das Sensorelement mit dem keramischen Grundkörper 2 und den wenigstens zwei Elektroden 3 bereitgestellt. Der driftstabile keramische Grundkörper 2 mit der Gold- oder Silberdickschichtmetallisierung als Elektroden 3 wird anschließend in einer hochpräzisen Vorrichtung eingespannt.

In einem nächsten Schritt B) werden die zwei Kontaktierungselemente 4 bereitgestellt. Die Kontaktierungselemente 4 werden anschließend teilweise in die Kontaktierungspaste 5 eingetaucht. Insbesondere werden die Kontaktierungselemente 4 in einer Gold- oder Silberkontaktierungspaste, je nach Art der Elektroden 3 des keramischen Grundkörpers 2, eingetaucht, wobei die mit Paste 5 benetzte Mantelfläche des jeweiligen Kontaktierungselements 4 kleiner als die Kantenlänge l des Sensorelements bzw. des keramischen Grundkörpers 2 sein muss.

In einem nächsten Schritt C) werden die Kontaktierungselemente 4 im Anbindungsbereich 7 an die Elektroden angepresst. Mit anderen Worten, die mit Kontaktierungspaste 5 beschichteten Endbereiche der Kontaktierungselemente 4 werden in der Vorrichtung mittels mechanischer Vorspannung an das Sensorelement gepresst.

In einem weiteren Schritt D) erfolgt eine Wärmebehandlung (Sintern). Dabei wird die Vorrichtung in einen Ofen gegeben und einem thermischen Profil unterzogen. Hierbei kann es sich um einen Batchofen oder Durchlaufofen handeln.

Nach dem Sintern erfolgt in einem nächsten Schritt E) eine Tauchlackierung mit Glaspaste 12 (Variante 1). Dabei wird zunächst die Glaspaste 12 bereitgestellt. In der Glaspaste 12 ist das Glaspulver dispergiert. Das Glaspulver weist ein rekristallisierendes Barium-Zink-Silikatglas auf. Die Ausdehnungskoeffizienten von Glaspulver, Kontaktierungselementen 4 und Grundkörper 2 sind wie oben beschrieben aufeinander abgestimmt.

Das gesinterte System wird mit einer definierten Geschwindigkeit teilweise in ein mit einer Glaspaste 12 gefülltes Reservoir eingetaucht, so dass das Sensorelement und wenigstens der Anbindungsbereich 7 vollständig mit der Glaspaste 12 umschlossen sind zur Ausbildung der Glasummantelung 6. Insbesondere muss der Sensorkopf 13 vollständig von der Glaspaste 12 umschlossen sein.

Um eine blasenfreie Umhüllung des Sensorkopfs 13 sicherzustellen erfolgt in einem Schritt F) eine leichte definierte laterale Bewegung des gesinterten Systems in der Glaspaste 12. Unter lateraler Bewegung ist hierbei eine Bewegung senkrecht zu Längsachse X der Sensoranordnung 1 zu verstehen. Anschließend wird das gesinterte System mit einer definierten Geschwindigkeit aus der Glaspaste 12 herausgezogen.

Es folgt ein Trocknungsschritt G). Die Trocknung muss ausreichend vorsichtig stattfinden damit eine blasen- und fehlerfreie Glasummantelung 6 sichergestellt ist und die für die Herstellung der Glaspaste 12 notwendigen Additive entweichen können. Beispielsweise wird die Glaspaste 12 zunächst 4 Stunden lang bei Raumtemperatur getrocknet. Anschließend kann die Glaspaste 12 für weitere 30 Minuten bei 50°C getrocknet werden.

Beim anschließenden Einglasungsschritt H) wird die Glasummantelung 6 mittels eines definierten Profils auf Temperaturen oberhalb des Glaserweichungspunktes gebracht und aufgeschmolzen. Auf diese Weise wird eine hermetisch dichte Glasummantelung 6 erzielt.

Um die oben beschriebene Druckverspannung des Sensorkopfes 13 zu realisieren ist es neben der Auswahl der geeigneten Materialien auch besonders wichtig ein angepasstes Temperaturprofil im Ofen einzuhalten. Sowohl bei der Trocknung als auch beim Glaseinschmelzprozess können geeignete Batch- oder Durchlauföfen verwendet werden.

Im Folgenden wird die Herstellung der Sensoranordnung 1 gemäß Figur 1 mittels Variante 2 (Glaspreform) beschrieben:
Zunächst werden die bereits oben beschriebenen Schritte A) bis D) durchgeführt. Mit anderen Worten, die Schritte A) bis D) der Herstellung gemäß Variante 2 sind identisch mit den Schritten A) bis der D) der oben beschriebenen Herstellung gemäß Variante 1.

Nach dem Sinterschritt erfolgt in Schritt E) das Aufstecken einer Glaspreform 14 (zylindrisches Glasröhrchen) auf das gesinterte System. Dabei wird das gesinterte System so positioniert, dass der Sensorkopf 13 mit Sensorelement und Anbindungsbereich 7 von der Glaspreform 14 überdeckt ist, also vollständig in einem Innenbereich der Glaspreform 14 angeordnet ist, wie aus Figur 2 ersichtlich ist.

Die Glaspreform 14 weist eine zylindrische Form auf. Die Glaspreform 14 ist vorgesintert. Die Glaspreform 14 ist nach oben und unten offen (offene Oberseite 14a und offene Unterseite 14b). Das Sensorelement und wenigstens der Anbindungsbereich 7 werden vollständig in die zylindrische Glaspreform 14 eingebracht. Insbesondere werden das Sensorelement und der Anbindungsbereich 7 vollständig in einem Innenbereich der Glaspreform 14 angeordnet. Die Kontaktierungselemente 4 ragen zumindest teilweise aus der Unterseite 14b der Glaspreform 14 heraus, wie aus Figur 2 ersichtlich ist.

Anschließend wird in Schritt F) die Glaspreform 14 im Ofen aufgeschmolzen zur Ausbildung der Glasummantelung 6 (siehe Figur 1). Das Aufschmelzen erfolgt mittels Erhitzen der Glaspreform 14 auf eine Temperatur oberhalb der Glaserweichungstemperatur T_{g}.

Das Temperaturprofil im Ofen beinhaltet dabei mehrere Schritte. Um die organische Additive, die bei einer gepressten Preform 14 enthalten sein können, vorsichtig zu verdampfen, wird bei einer geringeren Temperatur eine bestimmte Haltezeit vorgesehen bevor bei einer nachfolgend höheren Temperatur das eigentliche Aufschmelzen des Glases erfolgt.

Um die Druckverspannung des Sensorkopfes 13 zu realisieren ist es neben der Auswahl der geeigneten Materialien auch besonders wichtig ein angepasstes Temperaturprofil im Ofen einzuhalten. Sowohl bei der Trocknung als auch beim Glaseinschmelzprozess können geeignete Batch- oder Durchlauföfen verwendet werden.

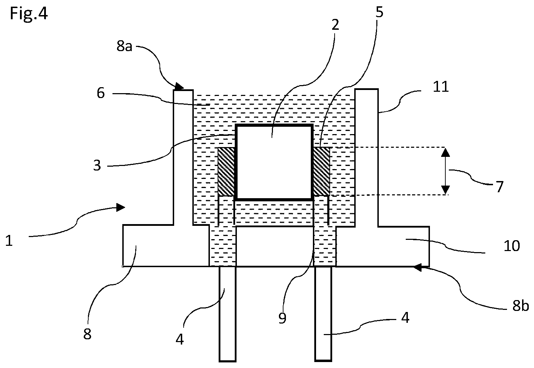

Die Figur 4 zeigt eine Sensoranordnung 1 gemäß einem zweiten Ausführungsbeispiel. Die Sensoranordnung gemäß 1 Figur 4 unterscheidet sich von der oben beschriebenen Sensoranordnung 1 gemäß Figur 1 im Wesentlichen durch die Form und Herstellung der Glasummantelung 6 bzw. das Vorhandensein einer Keramickappe 8. In Bezug auf die Merkmale der weiteren Komponenten (Sensorelement mit keramischem Grundkörper 2 und Elektroden 3, Kontaktierungselemente 4) sowie die Zusammensetzung der Glasummantelung 6 wird auf die Beschreibung in Zusammenhang mit Figur 1 verwiesen.

Die Sensoranordnung 1 gemäß Figur 4 weist eine Keramikkappe 8 auf. Die Keramikkappe 8 kann beispielsweise Aluminiumoxid aufweisen. Die Keramikkappe 8 weist einen Ausdehnungskoeffizienten auf, der geringfügig größer ist als der Ausdehnungskoeffizient der Glasummantelung 6. Vorzugsweise ist der Unterschied der Ausdehnungskoeffizienten von Keramikkappe 8 und Glasummantelung 6 kleiner 1 [10⁻⁶ K⁻¹].

Das Sensorelement und der Anbindungsbereich 7 sind vollständig in der Keramikkappe 8 eingebracht. Ferner sind die Kontaktierungselemente 4 sowie die Glasummantelung 6 zumindest teilweise in der Keramikkappe 8 eingebracht. Die Keramikkappe 8 ist mit der Glasummantelung 6 zumindest teilweise verschmolzen. Die Keramikkappe 8 erhöht die Langzeitstabilität der Sensoranordnung 1 bei hohen Einsatztemperaturen.

Die Keramikkappe 8 weist ein hülsenförmig ausgebildetes Oberteil 11 sowie ein plattenförmig ausgebildetes Unterteil 10 auf. Die Keramikkappe 8 weist ein offenes Ende (Oberseite 8a) und ein geschlossenes Ende (Unterseite 8b) auf. Das geschlossene Ende ist mit dem Unterteil 10 verschlossen. Oberteil 11 und Unterteil 10 sind einstückig ausgebildet. Das Unterteil 10 weist zwei Aussparungen bzw. Durchführungen 9 auf. Die Keramikkappe 8 weist bevorzugt Aluminiumoxid auf.

Die Sensoranordnung 1 gemäß Figur 4 wird durch zwei mögliche Herstellungsverfahren (Variante 1: Glaspreform; Variante 2: Glaspaste) hergestellt, welche jedoch in einigen Prozessschritten identisch sind.

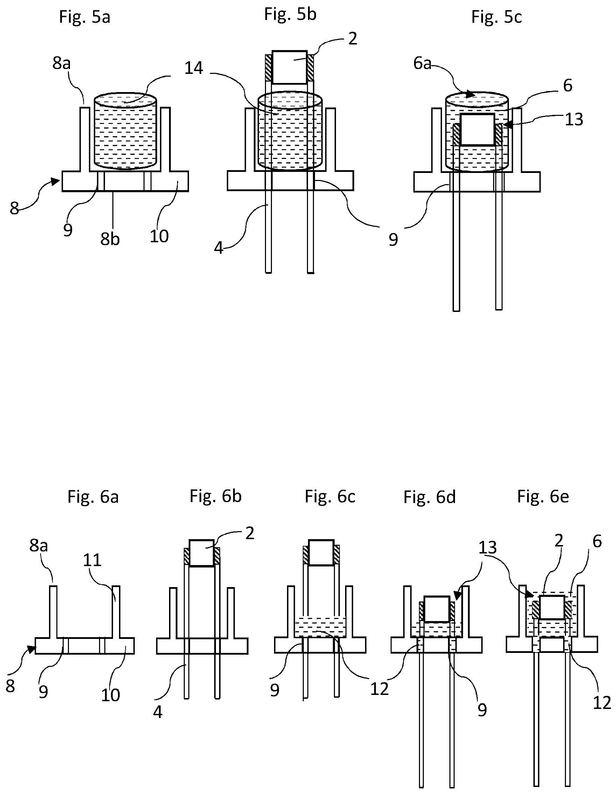

Im Folgenden wird zunächst die Herstellung der Sensoranordnung mit Variante 1 (Glaspreform) beschrieben, welche mit Hilfe der Figuren 5a bis 5c illustriert wird:
In den Schritten A) bis) D) erfolgt die Bereitstellung des Sensorelements und die Anbindung der Kontaktierungselemente 4. Die Schritte A) bis D) erfolgen analog zu den oben beschriebenen Verfahren zur Herstellung der Sensoranordnung gemäß Figur 1.

In einem weiteren Schritt E) wird die oben beschriebene Keramikkappe 8 bereit gestellt (Figur 5a).

In einem nächsten Schritt F) wird eine Glaspreform 14 bereit gestellt. Die Glaspreform 14 weist ein rekristallisierendes Barium-Zink-Silikatglas auf. Die Glaspreform 14 weist eine zylindrische Form auf. Die Glaspreform 14 ist vorgesintert. Die Glaspreform 14 ist nach oben und unten offen (offene Oberseite 14a und offene Unterseite 14b, Figur 2). Die Glaspreform 14 weist einen äußeren Durchmesser auf, welcher geringfügig kleiner ist als ein innerer Durchmesser der Keramikkappe 8.

Die Glaspreform 14 wird vom offenen Ende 8a der Keramikkappe 8 her in die Keramikkappe 8 eingebracht (Figur 5a). Die Glaspreform 14 wird so in die Keramikkappe 8 eingebracht, dass die Glaspreform 18 auf dem Unterteil 10 der Keramikkappe 8 aufliegt. Die Glaspreform 14 weist eine derartige Höhe auf, dass sie teilweise aus dem offenen Ende 8a der Keramikkappe 8 herausragt.

In einem weiteren Schritt G) werden das Sensorelement und wenigstens der Anbindungsbereich 7 vollständig in die zylindrische Glaspreform 14 eingebracht. Insbesondere werden das Sensorelement und der Anbindungsbereich 7 vollständig in einem Innenbereich der Glaspreform 14 angeordnet.

Dabei werden zunächst die Kontaktierungselemente 4 von der offenen Oberseite 8a der Keramikkappe 8 her in die Durchführungen 9 der Keramikkappe 8 eingebracht (Figur 5b). Die Kontaktierungselemente 4 ragen zumindest teilweise aus der Unterseite 14b der Glaspreform 14 und aus der Unterseite 8b der Keramikkappe 8 heraus, wie aus Figur 5b ersichtlich ist.

Anschließend wird die Sensorvorrichtung 1 vollständig in das hülsenförmige Oberteil 11 eingeschoben, so dass das Sensorelement und der Kontaktierungsbereich 7 vollständig in der Glaspreform 14 angeordnet sind (Figur 5c).

In einem weiteren Schritt H) wird die Anordnung einer Wärmebehandlung unterzogen zur Ausbildung der Glasummantelung 6. Dabei wird die Glaspreform 14 eingeschmolzen und in diesem Zusammenhang die Keramikkappe 8 mit der Glaspreform 14 zumindest teilweise verschmolzen. Das Aufschmelzen erfolgt mittels Erhitzen der Glaspreform 14 auf eine Temperatur oberhalb der Glaserweichungstemperatur T_{g}. Dabei dringt Glasmaterial zumindest teilweise in die Durchführungen 9 der Keramikkappe 8 ein und verschließt einen möglichen Ringspalt zwischen Durchführung 9 und Kontaktierungselement 4 vollständig (Figur 4).

Das Temperaturprofil im Ofen beinhaltet mehrere Schritte. Um die organische Additive, die bei einer gepressten Preform 14 enthalten sein können, vorsichtig zu verdampfen, wird bei einer geringeren Temperatur eine bestimmte Haltezeit vorgesehen bevor bei einer nachfolgend höheren Temperatur das eigentliche Aufschmelzen des Glases erfolgt.

Durch den Schmelzprozess legt sich das Glasmaterial ideal in der Keramikkappe 8 an und benetzt deren Innenwände. Durch die Wärmebehandlung schwindet ein Teil des Volumens des Glasmaterials, so dass die Glasummantelung 6 nach der Wärmebehandlung vollständig in der Keramikkappe 8 angeordnet ist (Figur 4).

Durch die Keramikkappe 8 wird die Robustheit der Sensoranordnung 1 noch erhöht.

Im Folgenden wird die Herstellung der Sensoranordnung gemäß Figur 4 mit Variante 2 (Glaspaste) beschrieben, wie aus den Figuren 6a bis 6e ersichtlich ist:
In den Schritten A) bis) D) erfolgt die Bereitstellung des Sensorelements und die Anbindung der Kontaktierungselemente **4.** Die Schritte A) bis D) erfolgen analog zu den oben beschriebenen Verfahren.

In Schritt E) wird eine Keramikkappe 8 bereitgestellt (Figur 6a). Das gesinterte System wird von der Oberseite 8a der Keramikkappe 8 her teilweise in die Keramikkappe 8 eingebracht. Wie aus Figur 6b ersichtlich ist, werden hierbei zunächst die Kontaktierungselemente 4 in die Durchführungen 9 eingebracht und das gesinterte System wird in Richtung des Unterteils 10 der Keramikkappe 8 geschoben.

In einem Schritt F) wird die Keramikkappe 8 in einer definierten Geschwindigkeit teilweise mit einer Glaspaste 12 befüllt. Beispielsweise wird das hülsenförmige Oberteil 11 der Keramikkappe 8 bis zu einem Drittel mit der Glaspaste 12 aufgefüllt (Figur 6c). Die Glaspaste 12 weist ein rekristallisierendes Barium-Zink-Silikatglas auf.

Anschließend kann eine leichte laterale Bewegung der Keramickappe 8 mit einer definierten Geschwindigkeit erfolgen, um die Glaspaste 12 gleichmäßig in der Keramikkappe 8 zu verteilen.

In einem Schritt G) wird das gesinterte System mit einer definierten Geschwindigkeit weiter in die Keramikkappe 8 eingebracht. Dabei dringt Glaspaste 12 zumindest teilweise in die Durchführungen 9 der Keramikkappe 8 ein und verschließt einen möglichen Ringspalt zwischen Durchführung 9 und Kontaktierungselement 4 dabei vollständig (Figuren 6d, 6e, 4). In einer Endposition sind das Sensorelement sowie der Anbindungsbereich 7 vollständig innerhalb der Keramikkappe 8 angeordnet (Figur 6d).

In einem Schritt H) erfolgt eine definierte laterale Bewegung mit einer definierten Geschwindigkeit zur Benetzung des Sensorelements und des Anbindungsbereichs 7 mit der Glaspaste 12 und zur Vermeidung von Blasenbildung in der Glaspaste 12.

Anschließend wird in einem Schritt I) die Keramikkappe 8 vollständig mit der Glaspaste 12 befüllt, so dass das Sensorelement und wenigstens der Anbindungsbereich 7 vollständig von der Glaspaste 12 umschlossen sind (Figur 6e). Das vollständige Befüllen erfolgt dabei mit einer definierten Geschwindigkeit.

In einem Schritt J) wird die Glaspaste 12 getrocknet. Die Trocknung muss ausreichend vorsichtig stattfinden damit eine blasen- und fehlerfreie Glasummantelung 6 sichergestellt wird. Ferner müssen die für die Herstellung der Glaspaste 12 notwendigen Additive entweichen können. Beispielsweise wird die Glaspaste 12 zunächst 4 Stunden lang bei Raumtemperatur getrocknet. Anschließend kann die Glaspaste 12 für weitere 30 Minuten bei 50°C getrocknet werden.

Zuletzt erfolgt ein Einglasungsschritt K). Dabei wird die Glasummantelung 6 auf eine Temperatur oberhalb der Glaserweichungstemperatur T_{g} gebracht, so dass die Glasummantelung 6 teilweise mit der Keramikkappe 8 verschmilzt.

Durch das beschriebene Verfahren wird eine hermetisch dichte, druckverspannte Glasummantelung 6 erzielt. Die resultierende Sensoranordnung 1 ist besonders robust, korrosionsbeständig sowie langzeitstabil unter hohen Temperaturen.

Die Beschreibung der hier angegebenen Gegenstände ist nicht auf die einzelnen speziellen Ausführungsformen beschränkt. Vielmehr können die Merkmale der einzelnen Ausführungsformen - soweit technisch sinnvoll - beliebig miteinander kombiniert werden.

### Bezugszeichenliste

- 1: Sensoranordnung
- 2: Grundkörper
- 2a: Seitenfläche des Grundkörpers
- 3: Elektrode
- 4: Kontaktierungselement
- 5: Kontaktierungspaste
- 6: Glasummantelung
- 6a: Oberseite
- 6b: Unterseite
- 6c: Einwölbung
- 7: Anbindungsbereich
- 8: Keramikkappe
- 8a: Oberseite der Keramikkappe
- 8b: Unterseite der Keramikkappe
- 9: Durchführung
- 10: Unterteil
- 11: Oberteil
- 12: Paste
- 13: Sensorkopf
- 14: Glaspreform
- 14a: Oberseite
- 14b: Unterseite

- X: Längsachse
- L: Länge der Sensoranordnung
- B: Breite des Sensorkopfs
- b: Breite des keramischen Grundkörpers
- l: Kantenlänge des keramischen Grundkörpers
- D1: Abstand
- D2: Abstand
- A: Ausdehnung

## Patentansprüche

1. Sensoranordnung (1) zur Messung einen Temperatur aufweisend:
- ein Sensorelement aufweisend einen keramischen Grundkörper (2) und wenigstens zwei Elektroden (3), wobei die Elektroden (3) an einer Außenseite des keramischen Grundkörpers (2) angeordnet sind,
- wenigstens zwei Kontaktierungselemente (4) zur elektrischen Kontaktierung des Sensorelements, wobei die Kontaktierungselemente (4) in einem Anbindungsbereich (7) mit den Elektroden (3) verbunden sind,
- eine Glasummantelung (6), wobei wenigstens der keramische Grundkörper (2) und der Anbindungsbereich (7) vollständig in die Glasummantelung (6) eingebracht sind,
wobei die Glasummantelung (6) druckverspannt ist und wobei die Ausdehnungskoeffizienten der Glasummantelung (6), der Kontaktierungselemente (4) und des Sensorelements zur Druckverspannung der Glasummantelung (6) aufeinander abgestimmt sind, **dadurch gekennzeichnet, dass** die Glasummantelung (6) einen kleineren Ausdehnungskoeffizienten aufweist als der keramische Grundkörper (2) und die Kontaktierungselemente (4).

2. Sensoranordnung (1) nach Anspruch 1,
wobei die Elektroden (3) eine bleifreie Gold- oder Silberdickschichtmetallisierung aufweisen.

3. Sensoranordnung (1) nach einem der vorangehenden Ansprüche,
wobei die Kontaktierungselemente (4) eine Nickel-Eisen Legierung oder Silber mit geringen Anteilen von Nickel aufweisen.

4. Sensoranordnung (1) nach einem der vorangehenden Ansprüche,
wobei die Kontaktierungselemente (4) eine Schutzschicht aufweisen, wobei die Schutzschicht Ni, Cu oder Ag aufweist.

5. Sensoranordnung (1) nach einem der vorangehenden Ansprüche,
wobei die Glasummantelung (6) ein rekristallisierendes Barium-Zink-Silikatglas aufweist.

6. Sensoranordnung (1) nach einem der vorangehenden Ansprüche,
wobei die Glasummantelung (6) ein Material aufweist dessen Schmelztemperatur unterhalb der Schmelztemperatur eines Materials der Elektroden (3) liegt.

7. Sensoranordnung (1) nach einem der vorangehenden Ansprüche,
wobei die Glasummantelung (6) ein Material aufweist dessen Erweichungstemperatur T_{g} oberhalb einer Anwendungstemperatur der Sensoranordnung (1) liegt.

8. Sensoranordnung (1) nach einem der vorangehenden Ansprüche,
wobei die Sensoranordnung (1) für hohe Einsatztemperaturen ausgebildet ist und wobei eine Anwendungstemperatur der Sensorordnung (1) ≥ 300°C und ≤ 650°C ist.

9. Sensoranordnung (1) nach einem der vorangehenden Ansprüche,
ferner aufweisend eine Keramikkappe (8), wobei die Keramickappe (8) mit der Glasummantelung (6) zumindest teilweise verschmolzen ist.

10. Verfahren zur Herstellung einer Sensoranordnung (1) gemäß einem der Ansprüche 1 bis 9
aufweisend die folgenden Schritte:
A) Bereitstellung eines Sensorelements aufweisend einen keramischen Grundkörper (2) und wenigstens zwei Elektroden (3);
B) Bereitstellung von wenigstens zwei Kontaktierungselementen (4) und teilweises Eintauchen der Kontaktierungselemente (4) in eine Kontaktierungspaste (5);
C) Anpressen der Kontaktierungselemente (4) an die Elektroden (3) in einem Anbindungsbereich (7);
D) Sintern;
E) Teilweises Eintauchen des gesinterten Systems mit einer definierten Geschwindigkeit in eine Glaspaste (12), so dass das Sensorelement und wenigstens der Anbindungsbereich (7) vollständig mit Glaspaste (12) umschlossen sind zur Ausbildung einer Glasummantelung (6);
F) Definierte laterale Bewegung des gesinterten Systems in der Glaspaste (12) und anschließendes Herausziehen des gesinterten Systems aus der Glaspaste (12) mit einer definierten Geschwindigkeit;
G) Trocknen;
H) Einglasen.

11. Verfahren nach Anspruch 10,
wobei Schritt G) zunächst ein Trocknen bei Raumtemperatur und anschließend ein Trocknen bei erhöhter Temperatur im Ofen umfasst.

12. Verfahren nach Anspruch 10 oder 11,
wobei in Schritt H) das Einglasen mittels Erhitzen der Glasummantelung (6) auf eine Temperatur oberhalb einer Glaserweichungstemperatur T_{g} und Aufschmelzen der Glasummantelung (6) erfolgt.

13. Verfahren nach einem der Ansprüche 10 bis 12,
wobei die Glasummantelung (6) ein rekristallisierendes Barium-Zink-Silikatglas aufweist.

14. Verfahren nach einem der Ansprüche 10 bis 13,
wobei in Schritt B) ein in der Kontaktierungspaste (5) eingetauchter Bereich der Kontaktierungselemente (4) kleiner ist als eine Kantenlänge (l) des keramischen Grundkörpers (2).

15. Verfahren nach einem der Ansprüche 10 bis 14,
wobei die Elektroden (3) eine bleifreie Gold- oder Silberdickschichtmetallisierung aufweisen.

16. Verfahren nach einem der Ansprüche 10 bis 15,
wobei die Kontaktierungselemente (4) eine Nickel-Eisen Legierung oder Silber mit geringen Anteilen von Nickel aufweisen, und/oder wobei die Kontaktierungselemente (4) eine Schutzschicht aufweisen, wobei die Schutzschicht Ni, Cu oder Ag aufweist.

17. Verfahren zur Herstellung einer Sensoranordnung (1) gemäß einem der Ansprüche 1 bis 9
aufweisend die folgenden Schritte:
A) Bereitstellung eines Sensorelements aufweisend einen keramischen Grundkörper (2) und wenigstens zwei Elektroden (3);
B) Bereitstellung von wenigstens zwei Kontaktierungselementen (4) und teilweises Eintauchen der Kontaktierungselemente (4) in eine Kontaktierungspaste (5);
C) Anpressen der Kontaktierungselemente (4) an die Elektroden (3) in einem Anbindungsbereich (7);
D) Sintern;
E) Aufstecken einer Glaspreform (14) auf das gesinterte System, so dass das Sensorelement und wenigstens der Anbindungsbereich (7) vollständig in der Glaspreform (14) eingebracht sind;
F) Aufschmelzen der Glaspreform (14) zur Ausbildung einer Glasummantelung (6).

18. Verfahren nach Anspruch 17,
wobei in Schritt F) das Aufschmelzen mittels Erhitzen der Glaspreform (14) auf eine Temperatur oberhalb einer Glaserweichungstemperatur T_{g} erfolgt.

19. Verfahren nach einem der Ansprüche 17 oder 18,
wobei die Glasummantelung (6) ein rekristallisierendes Barium-Zink-Silikatglas aufweist.

20. Verfahren nach einem der Ansprüche 17 bis 19,
wobei in Schritt B) ein in der Kontaktierungspaste (5) eingetauchte Bereich der Kontaktierungselemente (4) kleiner ist als eine Kantenlänge (l) des keramischen Grundkörpers (2).

21. Verfahren nach einem der Ansprüche 17 bis 20,
wobei die Kontaktierungselemente (4) eine Nickel-Eisen Legierung oder Silber mit geringen Anteilen von Nickel aufweisen, und/oder wobei die Kontaktierungselemente (4) eine Schutzschicht aufweisen, wobei die Schutzschicht Ni, Cu oder Ag aufweist.

22. Verfahren zur Herstellung einer Sensoranordnung (1) gemäß einem der Ansprüche 1 bis 9 aufweisend die folgenden Schritte:
A) Bereitstellung eines Sensorelements aufweisend einen keramischen Grundkörper (2) und wenigstens zwei Elektroden (3);
B) Bereitstellung von wenigstens zwei Kontaktierungselementen (4) und teilweises Eintauchen der Kontaktierungselemente (4) in eine Kontaktierungspaste (5);
C) Anpressen der Kontaktierungselemente (3) an die Elektroden (3) in einem Anbindungsbereich (7);
D) Sintern;
E) Bereitstellen einer Keramikkappe (8) und teilweises Einbringen des gesinterten Systems in die Keramikkappe (8);
F) Teilweises Befüllen der Keramikkappe (8) mit einer Glaspaste (12) in einer definierten Geschwindigkeit;
G) Weiteres Einbringen des gesinterten Systems in die teilweise mit Glaspaste (12) gefüllte Keramikkappe (8) mit einer definierten Geschwindigkeit, so dass das Sensorelement und der Anbindungsbereich (7) vollständig in der Keramikkappe (8) angeordnet sind;
H) Definierte laterale Bewegung mit einer vorbestimmten Geschwindigkeit zur Benetzung des Sensorelements und des Anbindungsbereichs (7) mit der Glaspaste (12);
I) Weiteres Befüllen der Keramikkappe (8) mit der Glaspaste (12), so dass das Sensorelement und wenigstens der Anbindungsbereich (7) vollständig von der Glaspaste (12) umschlossen sind, zur Ausbildung einer Glasummantelung (6);
J) Trocknen;
K) Einglasen.

23. Verfahren nach Anspruch 22,
wobei in Schritt K) das Einglasen mittels Erhitzen der Glasummantelung (6) auf eine Temperatur oberhalb einer Glaserweichungstemperatur T_{g} und Aufschmelzen der Glasummantelung (6) erfolgt.

24. Verfahren nach Anspruch 22 oder 23,
wobei vor Schritt G) eine definierte laterale Bewegung der Keramikkappe (8) mit einer vorbestimmten Geschwindigkeit erfolgt zur Verteilung der Glaspaste (12) in der Keramikkappe (8).

## Claims

1. Sensor arrangement (1) for measuring a temperature, having:
- a sensor element having a ceramic main body (2) and at least two electrodes (3), wherein the electrodes (3) are arranged on an outer side of the ceramic main body (2),
- at least two contact-making elements (4) for electrically contacting the sensor element, wherein the contact-making elements (4) are connected to the electrodes (3) in a connecting region (7),
- a glass sheathing (6), wherein at least the ceramic main body (2) and the connecting region (7) are fully inserted into the glass sheathing (6),
wherein the glass sheathing (6) is compressively braced, and wherein the coefficients of expansion of the glass sheathing (6), the contact-making elements (4) and the sensor element are matched to one another for compressively bracing the glass sheathing (6), **characterized in that**
the glass sheathing (6) has a smaller coefficient of expansion than the ceramic main body (2) and the contact-making elements (4).

2. Sensor arrangement (1) according to claim 1, wherein the electrodes (3) have a lead-free gold or silver thick-film metallization.

3. Sensor arrangement (1) according to either of the preceding claims,
wherein the contact-making elements (4) comprise a nickel-iron alloy or silver containing small proportions of nickel.

4. Sensor arrangement (1) according to either of the preceding claims,
wherein the contact-making elements (4) have a protective layer, wherein the protective layer comprises Ni, Cu or Ag.

5. Sensor arrangement (1) according to either of the preceding claims,
wherein the glass sheathing (6) comprises a recrystallizing barium zinc silicate glass.

6. Sensor arrangement (1) according to either of the preceding claims,
wherein the glass sheathing (6) comprises a material whose melting temperature lies below the melting temperature of a material of the electrodes (3).

7. Sensor arrangement (1) according to either of the preceding claims,
wherein the glass sheathing (6) has a material whose softening temperature T_{g} lies above an application temperature of the sensor arrangement (1).

8. Sensor arrangement (1) according to either of the preceding claims,
wherein the sensor arrangement (1) is designed for high operating temperatures and wherein an application temperature of the sensor arrangement (1) is ≥ 300°C and ≤ 650°C.

9. Sensor arrangement (1) according to either of the preceding claims,
further having a ceramic cap (8), wherein the ceramic cap (8) is at least partially fused with the glass sheathing (6).

10. Method for producing a sensor arrangement (1) according to any one of claims 1 to 9, comprising the following steps:
A) providing a sensor element having a ceramic main body (2) and at least two electrodes (3);
B) providing at least two contact-making elements (4) and partially immersing the contact-making elements (4) into a contact-making paste (5);
C) pressing the contact-making elements (4) against the electrodes (3) in a connecting region (7);
D) sintering;
E) partially immersing the sintered system into a glass paste (12) at a defined speed, so that the sensor element and at least the connecting region (7) are completely enclosed by glass paste (12) for forming a glass sheathing (6);
F) defined lateral movement of the sintered system in the glass paste (12) and subsequently removing the sintered system from the glass paste (12) at a defined speed;
G) drying;
H) glazing.

11. Method according to claim 10,
wherein step G) initially comprises drying at room temperature and then drying at elevated temperature in the furnace.

12. Method according to claim 10 or 11,
wherein, in step H), the glazing is performed by means of heating the glass sheathing (6) to a temperature above a glass softening temperature T_{g} and melting the glass sheathing (6).

13. Method according to any one of claims 10 to 12, wherein the glass sheathing (6) comprises a recrystallizing barium zinc silicate glass.

14. Method according to any one of claims 10 to 13, wherein, in step B), a region of the contact-making elements (4) immersed in the contact-making paste (5) is smaller than an edge length (l) of the ceramic main body (2).

15. Method according to any one of claims 10 to 14, wherein the electrodes (3) have a lead-free gold or silver thick-film metallization.

16. Method according to any one of claims 10 to 15, wherein the contact-making elements (4) comprise a nickel-iron alloy or silver containing small proportions of nickel, and/or wherein the contact-making elements (4) have a protective layer, wherein the protective layer comprises Ni, Cu or Ag.

17. Method for producing a sensor arrangement (1) according to any one of claims 1 to 9, comprising the following steps:
A) providing a sensor element having a ceramic main body (2) and at least two electrodes (3);
B) providing at least two contact-making elements (4) and partially immersing the contact-making elements (4) into a contact-making paste (5);
C) pressing the contact-making elements (4) against the electrodes (3) in a connecting region (7);
D) sintering;
E) attaching a glass preform (14) to the sintered system, so that the sensor element and at least the connecting region (7) are fully inserted into the glass preform (14);
F) melting the glass preform (14) to form a glass sheathing (6).

18. Method according to claim 17,
wherein, in step F), the melting is performed by means of heating the glass preform (14) to a temperature above a glass softening temperature T_{g}.

19. Method according to either of claims 17 and 18, wherein the glass sheathing (6) comprises a recrystallizing barium zinc silicate glass.

20. Method according to any one of claims 17 to 19, wherein, in step B), a region of the contact-making elements (4) immersed in the contact-making paste (5) is smaller than an edge length (l) of the ceramic main body (2).

21. Method according to any one of claims 17 to 20, wherein the contact-making elements (4) comprise a nickel-iron alloy or silver containing small proportions of nickel, and/or wherein the contact-making elements (4) have a protective layer, wherein the protective layer comprises Ni, Cu or Ag.

22. Method for producing a sensor arrangement (1) according to any one of claims 1 to 9, comprising the following steps:
A) providing a sensor element having a ceramic main body (2) and at least two electrodes (3);
B) providing at least two contact-making elements (4) and partially immersing the contact-making elements (4) into a contact-making paste (5);
C) pressing the contact-making elements (3) against the electrodes (3) in a connecting region (7);
D) sintering;
E) providing a ceramic cap (8) and partially inserting the sintered system into the ceramic cap (8);
F) partially filling the ceramic cap (8) with a glass paste (12) at a defined speed;
G) further inserting the sintered system into the ceramic cap (8) partially filled with glass paste (12) at a defined speed, so that the sensor element and the connecting region (7) are fully arranged in the ceramic cap (8);
H) defined lateral movement at a predetermined speed for wetting the sensor element and the connecting region (7) with the glass paste (12);
I) further filling the ceramic cap (8) with the glass paste (12), so that the sensor element and at least the connecting region (7) are completely enclosed by the glass paste (12), for forming a glass sheathing (6);
J) drying;
K) glazing.

23. Method according to claim 22,
wherein, in step K), the glazing is performed by means of heating the glass sheathing (6) to a temperature above a glass softening temperature T_{g} and melting the glass sheathing (6).

24. Method according to claim 22 or 23,
wherein, before step G), a defined lateral movement of the ceramic cap (8) at a predetermined speed takes place for distributing the glass paste (12) in the ceramic cap (8).

## Revendications

1. Agencement de capteur (1) permettant de mesurer une température, comprenant :
- un élément capteur comprenant un corps principal en céramique (2) et au moins deux électrodes (3), les électrodes (3) étant disposées sur un côté extérieur du corps principal en céramique (2),
- au moins deux éléments d'établissement de contact (4) permettant d'établir un contact électrique avec l'élément capteur, les éléments d'établissement de contact (4) étant connectés aux électrodes (3) dans une région de connexion (7),
- une gaine de verre (6), au moins le corps principal en céramique (2) et la région de connexion (7) étant entièrement insérés dans la gaine de verre (6),
la gaine de verre (6) étant soumise à un calage par compression, et les coefficients de dilatation de la gaine de verre (6), des éléments d'établissement de contact (4) et de l'élément capteur étant adaptés les uns aux autres pour le calage par compression de la gaine de verre (6),
**caractérisé en ce que**
la gaine de verre (6) présente un coefficient de dilatation inférieur à celui du corps principal en céramique (2) et des éléments d'établissement de contact (4).

2. Agencement de capteur (1) selon la revendication 1, dans lequel les électrodes (3) présentent une métallisation en couche épaisse d'or ou d'argent sans plomb.

3. Agencement de capteur (1) selon l'une des revendications précédentes,
dans lequel les éléments d'établissement de contact (4) comprennent un alliage nickel-fer ou de l'argent avec de faibles proportions de nickel.

4. Agencement de capteur (1) selon l'une des revendications précédentes,
dans lequel les éléments d'établissement de contact (4) comprennent une couche protectrice, la couche protectrice comprenant du Ni, du Cu ou de l'Ag.

5. Agencement de capteur (1) selon l'une des revendications précédentes,
dans lequel la gaine de verre (6) comprend un verre de silicate de baryum-zinc recristallisant.

6. Agencement de capteur (1) selon l'une des revendications précédentes,
dans lequel la gaine de verre (6) comprend un matériau dont la température de fusion se situe en dessous de la température de fusion d'un matériau des électrodes (3).

7. Agencement de capteur (1) selon l'une des revendications précédentes,
dans lequel la gaine de verre (6) comprend un matériau dont la température de ramollissement T_{g} se situe au-dessus d'une température d'application de l'agencement de capteur (1).

8. Agencement de capteur (1) selon l'une des revendications précédentes,
l'agencement de capteur (1) étant conçu pour des températures de fonctionnement élevées et une température d'application de l'agencement de capteur (1) étant ≥ 300 °C et ≤ 650 °C.

9. Agencement de capteur (1) selon l'une des revendications précédentes,
comprenant en outre un capuchon en céramique (8), le capuchon en céramique (8) étant au moins partiellement fusionné avec la gaine de verre (6).

10. Procédé de fabrication d'un agencement de capteur (1) selon l'une des revendications 1 à 9, comprenant les étapes suivantes :
A) fourniture d'un élément capteur comprenant un corps principal en céramique (2) et au moins deux électrodes (3) ;
B) fourniture d'au moins deux éléments d'établissement de contact (4) et immersion partielle des éléments d'établissement de contact (4) dans une pâte d'établissement de contact (5) ;
C) application sous pression des éléments d'établissement de contact (4) sur les électrodes (3) dans une région de connexion (7) ;
D) frittage ;
E) immersion partielle du système fritté à une vitesse définie dans une pâte de verre (12), de sorte que l'élément capteur et au moins la région de connexion (7) soient entièrement entourés de pâte de verre (12) pour former une gaine de verre (6) ;
F) déplacement latéral défini du système fritté dans la pâte de verre (12) puis retrait du système fritté de la pâte de verre (12) à une vitesse définie ;
G) séchage ;
H) vitrification

11. Procédé selon la revendication 10,
dans lequel l'étape G) comprend en premier lieu un séchage à température ambiante puis un séchage à température élevée dans le four.

12. Procédé selon la revendication 10 ou 11,
dans lequel, à l'étape H), la vitrification est effectuée par chauffage de la gaine de verre (6) à une température supérieure à une température de ramollissement du verre T_{g} et par fusion de la gaine de verre (6).

13. Procédé selon l'une des revendications 10 à 12, dans lequel la gaine de verre (6) comprend un verre de silicate de baryum-zinc recristallisant.

14. Procédé selon l'une des revendications 10 à 13, dans lequel, à l'étape B), une région des éléments d'établissement de contact (4) immergée dans la pâte d'établissement de contact (5) est plus petite qu'une longueur d'arête (l) du corps principal en céramique (2).

15. Procédé selon l'une des revendications 10 à 14, dans lequel les électrodes (3) présentent une métallisation en couche épaisse d'or ou d'argent sans plomb.

16. Procédé selon l'une des revendications 10 à 15, dans lequel les éléments d'établissement de contact (4) comprennent un alliage nickel-fer ou de l'argent avec de faibles proportions de nickel et/ou dans lequel les éléments d'établissement de contact (4) comprennent une couche protectrice, la couche protectrice comprenant du Ni, du Cu ou de l'Ag.

17. Procédé de fabrication d'un agencement de capteur (1) selon l'une des revendications 1 à 9, comprenant les étapes suivantes :
A) fourniture d'un élément capteur comprenant un corps principal en céramique (2) et au moins deux électrodes (3) ;
B) fourniture d'au moins deux éléments d'établissement de contact (4) et immersion partielle des éléments d'établissement de contact (4) dans une pâte d'établissement de contact (5) ;
C) application sous pression des éléments d'établissement de contact (4) sur les électrodes (3) dans une région de connexion (7) ;
D) frittage ;
E) enfichage d'une préforme de verre (14) sur le système fritté, de sorte que l'élément capteur et au moins la région de connexion (7) soient entièrement insérés dans la préforme de verre (14) ;
F) fusion de la préforme de verre (14) pour former une gaine de verre (6).

18. Procédé selon la revendication 17,
dans lequel, à l'étape F), la fusion est effectuée par chauffage de la préforme de verre (14) à une température supérieure à une température de ramollissement du verre T_{g}.

19. Procédé selon l'une des revendications 17 ou 18, dans lequel la gaine de verre (6) comprend un verre de silicate de baryum-zinc recristallisant.

20. Procédé selon l'une des revendications 17 à 19, dans lequel, à l'étape B), une région des éléments d'établissement de contact (4) immergée dans la pâte d'établissement de contact (5) est plus petite qu'une longueur d'arête (l) du corps principal en céramique (2).

21. Procédé selon l'une des revendications 17 à 20, dans lequel les éléments d'établissement de contact (4) comprennent un alliage nickel-fer ou de l'argent avec de faibles proportions de nickel et/ou dans lequel les éléments d'établissement de contact (4) comprennent une couche protectrice, la couche protectrice comprenant du Ni, du Cu ou de l'Ag.

22. Procédé de fabrication d'un agencement de capteur (1) selon l'une des revendications 1 à 9, comprenant les étapes suivantes :
A) fourniture d'un élément capteur comprenant un corps principal en céramique (2) et au moins deux électrodes (3) ;
B) fourniture d'au moins deux éléments d'établissement de contact (4) et immersion partielle des éléments d'établissement de contact (4) dans une pâte d'établissement de contact (5) ;
C) application sous pression des éléments d'établissement de contact (3) sur les électrodes (3) dans une région de connexion (7) ;
D) frittage ;
E) fourniture d'un capuchon en céramique (8) et introduction partielle du système fritté dans le capuchon en céramique (8) ;
F) remplissage partiel du capuchon en céramique (8) d'une pâte de verre (12) à une vitesse définie ;
G) poursuite de l'introduction du système fritté dans le capuchon en céramique (8) partiellement rempli de pâte de verre (12) à une vitesse définie, de sorte que l'élément capteur et la région de connexion (7) soient entièrement disposés dans le capuchon en céramique (8) ;
H) déplacement latéral défini à une vitesse prédéterminée pour mouiller l'élément capteur et la région de connexion (7) avec la pâte de verre (12) ;
I) poursuite du remplissage du capuchon en céramique (8) de la pâte de verre (12), de sorte que l'élément capteur et au moins la région de connexion (7) soient entièrement entourés par la pâte de verre (12) pour former une gaine de verre (6) ;
J) séchage ;
K) vitrification.

23. Procédé selon la revendication 22,
dans lequel, à l'étape K), la vitrification est effectuée par chauffage de la gaine de verre (6) à une température supérieure à une température de ramollissement du verre T_{g} et par fusion de la gaine de verre (6).

24. Procédé selon la revendication 22 ou 23,
dans lequel, avant l'étape G), un déplacement latéral défini du capuchon en céramique (8) est effectué à une vitesse prédéterminée pour répartir la pâte de verre (12) dans le capuchon en céramique (8).
